# EUROPÄISCHE PATENTSCHRIFT

(11) **EP 1 714 786 B1**
(45) Veröffentlichungstag und Bekanntmachung des Hinweises auf die Patenterteilung: **06.06.2018**
(21) Anmeldenummer: 06008294.8
(22) Anmeldetag: 21.04.2006
(51) Int. Cl.: B41F 33/00, B41F 33/02, G01N 21/89, G06T 7/00, H04N 5/247

(54) **Vorrichtung zur Inspektion von Druckerzeugnissen**
Device for inspecting printed products
Dispositif pour l'inspection de produits imprimés

(30) Priorität: 22.04.2005 DE 102005018855
(43) Veröffentlichungstag der Anmeldung: 25.10.2006
(60) Teilanmeldung: 17178450.7
(73) Patentinhaber: Texmag GmbH Vertriebsgesellschaft, 8800 Thalwil (CH)
(72) Erfinder: Tatarcyzk, Christina, 82194 Gröbenzell (DE); Tatarcyzk, Joachim, 82194 Gröbenzell (DE)
(74) Vertreter: Fischer, Ernst

(56) Entgegenhaltungen:
- EP-A- 0 410 253
- EP-A- 0 554 811
- EP-A- 0 749 833
- EP-A- 0 816 554
- EP-A2- 1 470 918
- WO-A-03/067188
- US-A- 5 305 099
- US-A1- 2002 102 101
- US-A1- 2004 008 773

## Beschreibung

### Hintergrund der Erfindung

Die Erfindung betrifft eine Vorrichtung zur Inspektion von mit einer Druckmaschine hergestellten Druckerzeugnissen, die mit einer Kamera versehen ist, um insbesondere die Druckqualität der mit der Druckmaschine hergestellten Druckerzeugnisse beurteilen zu können.

Vorrichtungen der oben genannten Art werden beispielsweise bei Offsetdruckmaschinen verwendet, um gegebenenfalls nach dem Ziehen eines Probebogens visuell und/oder messtechnisch mögliche Qualitätsdefekte, wie beispielsweise Flecken, Butzen oder Rakelstreifen möglichst frühzeitig zu erkennen.

Es ist ferner bekannt, bei Druckmaschinen eine permanente Qualitätsüberwachung durchzuführen, indem mit einer Kamera bzw. Bildaufnahmeeinrichtung kontinuierlich Bilddaten gewonnen und diese dann manuell oder weitgehend automatisch ausgewertet werden. So können Abweichungen der Qualität der hergestellten Druckerzeugnisse ermittelt und entsprechende Warnhinweise ausgegeben oder es kann korrigierend auf den Druckprozess eingewirkt werden.

Die bei derartigen Qualitätsüberwachungen durchzuführenden einzelnen Messungen bzw. Beurteilungen können sehr vielfältig sein und es kann sich insbesondere die Anforderung ergeben, dass mit der eingesetzten Kamera sowohl ein großes Inspektionsfeld als auch einzelne Details beurteilt werden müssen. Um dies zu ermöglichen wird bei bekannten Bildinspektionssystemen für Druckmaschinen oftmals eine Zoom-Kamera eingesetzt, mit der dann das Inspektionsfeld mit verschiedenen, manuell oder automatisch anzuwählenden Ortsauflösungen betrachtet werden kann.

Zwar hat sich die Verwendung von Zoom-Kameras bei Bildinspektionssystemen für Druckmaschinen inzwischen weitgehend durchgesetzt, die dazu verwendete Technik ist aber leider vergleichsweise wartungsanfällig und teuer.

EP 0 554 811 A1 offenbart eine Vorrichtung zum Erfassen von Druckfehlern In einer Druckmaschine. US 2002/0102101 A1 offenbart ein Kamerasystem mit einer stationären Kamera und einer fernsteuerbaren Kamera. EP 1 470 918 A2 offenbart eine Bildverarbeitungsapparatur zum Messen von räumlichen und spektralen Informationen gemäß dem Oberbegriff des Anspruchs 1.

### Zugrunde liegende Aufgabe

Der Erfindung liegt die Aufgabe zugrunde eine Vorrichtung zur Inspektion von mit einer Druckmaschine hergestellten Druckerzeugnissen sowie eine zugehörige Druckmaschine bereitzustellen, welche eine Qualitätskontrolle der oben genannten Art ermöglicht und diese darüber hinaus insgesamt besonders kostengünstig gestaltet.

### Erfindungsgemäße Lösung

Die Aufgabe wird mit den Merkmalen der Patentansprüche 1 und 9 gelöst. Bevorzugte Ausgestaltungen dazu sind in den weiteren Patentansprüchen angegeben. Diese Aufgabe ist erfindungsgemäß mit einer eingangs genannten Vorrichtung zur Inspektion von mit einer Druckmaschine hergestellten Druckerzeugnissen gelöst, die mit einer ersten Kamera versehen ist, welche auf ein am Druckerzeugnis zu überprüfendes Inspektionsfeld gerichtet ist, und bei der mindestens eine weitere Kamera vorgesehen ist, welche zumindest abschnittsweise auf dasselbe, bereits von der ersten Kamera überwachte Inspektionsfeld gerichtet ist. Die Aufgabe ist ferner mit einer Druckmaschine gelöst, bei der eine derartige erfindungsgemäße Vorrichtung zur Inspektion von Druckerzeugnissen vorgesehen ist. Die erfindungsgemäße Vorrichtung kann insbesondere derart gestaltet sein, dass an dem durch die Druckmaschine durchlaufenden Druckerzeugnis mit der ersten Kamera an einer ersten Stelle innerhalb der Druckmaschine ein Inspektionsfeld am Druckerzeugnis, beispielsweise ein bestimmtes Druckbild darauf, betrachtet wird und dann an einer im Prozess nachfolgenden Stelle mit der zweiten Kamera an genau diesem Druckerzeugnis bzw. Druckbild und in genau diesem Inspektionsfeld eine zweite Beobachtung bzw. Untersuchung mit der mindestens einen weiteren Kamera erfolgt.

Bei dem erfindungsgemäßen Bildinspektionssystem für eine Druckmaschine ist nicht allein eine einzige Kamera auf ein bestimmtes Inspektionsfeld am Druckerzeugnis gerichtet, sondern es sind zumindest zwei Kameras vorgesehen, welche in dem Inspektionsfeld eine Überprüfung ermöglichen. Mit den mehreren Kameras ist dabei insbesondere nicht allein ein System geschaffen, mit dem redundante Bildinformationen vom Druckerzeugnis aufgenommen bzw. abgegriffen werden, sondern die mehreren Kameras sind gezielt auf unterschiedliche Inspektionsaufgaben angepasst. Auf diese Weise ist es mit den mehreren erfindungsgemäß vorgesehenen Kameras möglich, dass zu einem einzelnen Aufnahmezeitpunkt eine Vielzahl unterschiedlicher Kontrollinformationen aus ein und demselben Inspektionsfeld abgegriffen werden können. Auf ein Verstellen oder Verfahren von Kameras kann dabei verzichtet werden, was sich - wie nachfolgend noch genauer erläutert werden wird - sehr vorteilhaft auf die Kontrollzeiten der Qualitätsüberwachung und die Reaktionszeiten während einer Einjustierung eines Druckprozesses auswirken kann.

Die oben erläuterte erfindungsgemäße Überwachung eines bestimmten Inspektionsfeldes eines durch die Druckmaschine laufenden Druckbildes kann beispielsweise derart genutzt werden, dass die erste Kamera vor einem Trockner der Druckmaschine und die mindestens eine weitere Kamera hinter dem Trockner angeordnet ist. Die Bildaufnahme der weiteren Kamera wird dann gezielt auf ein bereits vor dem Trockner mit der ersten Kamera betrachtetes einzelnes Druckbild gerichtet. Durch diese erneute Betrachtung desselben Druckbildes kann nachfolgend insbesondere durch einen Vergleich der Bildaufnahmen der beiden Kameras z.B. auf die Qualität des Farbauftrages und dessen Trocknung rückgeschlossen werden.

Erfindungsgemäß kann sehr schnell eine bildhafte Darstellung der im Wesentlichen gesamten Fläche eines Druckerzeugnisses und gleichzeitig eine zielgerichtete Qualitätskontrolle bzw. Bewertung einzelner Details des Druckerzeugnisses bereitgestellt werden. Die Informationen können dann zum Steuern und Regeln von Betriebsvorgängen an der Druckmaschine und von Vorrichtungen genutzt werden, welche der Druckmaschine vor- und nachgeschaltet sind. Die Schnelligkeit der erfindungsgemäßen Kontrolle und Auswertung wird insbesondere dadurch erreicht, dass gemäß der Erfindung auf die Verwendung von Zoom-Objektiven verzichtet werden kann, wie nachfolgend noch genauer erläutert wird. Bekannte Zoom-Objektive erfordern insbesondere eine vergleichsweise lange Zeit zum Verstellen der Brennweite. Diese Zeit kann bei der erfindungsgemäßen Aufnahmetechnik eingespart werden.

Erfindungsgemäß ist
die mindestens eine weitere Kamera allein auf einen Inspektionsfeldausschnitt des von der ersten Kamera überwachten Inspektionsfeldes gerichtet.

Mit anderen Worten wird von
der weiteren Kamera eine Detailaufnahme innerhalb des Inspektionsfelds der ersten Kamera gerichtet gemacht.

Diese Detailaufnahme kann
zeitgleich mit einer
Übersichtsaufnahme gemacht werden, weil ständig mehrere
Kameras für Bildaufnahmen zur Verfügung stehen.

Auf ein Verstellen von beispielsweise einer
Zoom-Kamera kann dadurch erfindungsgemäß verzichtet werden. Die derart gesparte Zeit ermöglicht eine erheblich schnellere Reaktion der Bediener der Druckmaschine bei Qualitätsmängeln. Entsprechend können Mängel auch schneller behoben und dadurch kann die Menge an Makulatur an der Druckmaschine mit Hilfe der Erfindung erheblich verringert werden. Das Fehlen einer ZoomVerstellung vereinfacht ferner erheblich die Ansteuerung der erfindungsgemäßen Vorrichtung und senkt damit sowohl die Herstellungs- als auch die Betriebskosten. Die Kameras der erfindungsgemäßen Vorrichtung können darüber hinaus im Wesentlichen auch ohne bewegliche Teile ausgeführt werden, so dass die Kosten für Herstellung, Wartung und Reparatur der erfindungsgemäßen Vorrichtung vergleichsweise gering gehalten werden können und insbesondere die Herstellungskosten in der Regel zumindest nicht über jenen für eine herkömmliche Kamera mit einem zugehörigen Zoom-Objektiv liegen.

So kann erfindungsgemäß mit der ersten Kamera eine visuelle Inspektion beispielsweise zum Erkennen von Flecken, Ölspritzern, Butzen, Kratzern oder Rakelstreifen durchgeführt werden. Sie ermöglicht also eine Fehlerbewertung "von einem weiter entfernten Standpunkt aus". Mit der erfindungsgemäß vorgesehenen zweiten Kamera kann insbesondere gleichzeitig beispielsweise eine Farbmessung, Farbdichtemessung und/oder eine Farbregistermessung durchgeführt werden. Dabei kann mit der zweiten Kamera insbesondere eine detaillierte Fehlerbewertung "von einem nahen Standpunkt aus" erfolgen. Die erste Kamera kann ferner zum erleichterten Einrichten der weiteren Kamera und zum leichteren Auffinden des Inspektionsfeldausschnitts auf dem Druckerzeugnis genutzt werden. Ferner kann die zweite Kamera beispielsweise für eine Barcodeauswertung innerhalb des von der ersten Kamera überprüfen Inspektionsfelds genutzt werden.

Dabei wird mit der mindestens einen weiteren Kamera eine höher ortsaufgelöste Aufnahme eines Inspektionsfeldausschnitts des von der ersten Kamera überwachten Inspektionsfeldes bereitgestellt. Ferner kann mit der mindestens einen weiteren Kamera eine erhöhte Dynamik von beispielsweise bis zu 4000 Graustufen in den Bildaufnahmen bereitgestellt werden.

Um die oben genannten Vorteile zu erzielen, sollte ferner die erste Kamera vorteilhaft auf zumindest einen wesentlichen Teil des eigentlichen Druckbildes des Druckerzeugnisses gerichtet sein.

Die mindestens eine weitere Kamera sollte vorteilhaft auf mindestens eine am eigentlichen Druckbild des Druckerzeugnisses angeordnete Messmarke, z.B. eine Schnitt-, Farb- oder Registermarke, ausgerichtet sein. So kann beispielsweise mit einer erfindungsgemäß vorgesehenen und als Detailkamera gestalteten weiteren Kamera eine Kontrolle von Passkreuzen am Druckerzeugnis durchgeführt werden.

Um mit der erfindungsgemäß vorgesehenen weiteren Kamera die oben genannte Farbmessung und/oder Farbdichtemessung in Farbfeldern eines Druckkontrollstreifens durchführen zu können, sollte die mindestens eine weitere Kamera auf einen solchen am eigentlichen Druckbild des Druckerzeugnisses angeordneten, insbesondere farbigen Druckkontrollstreifen gerichtet sein. Alternativ oder zusätzlich können Istwerte für die Farbregelung der Druckmaschine mit der erfindungsgemäß vorgesehenen weiteren Kamera aus gedruckten Stellen des eigentlichen Druckbildes gewonnen werden.

Für die oben genannte visuelle Inspektion mittels der erfindungsgemäßen Vorrichtung sollte diese vorteilhaft mindestens zwei Anzeigen bzw. bildhafte Wiedergaben, insbesondere in Gestalt von Bildschirmen aufweisen, mit denen das mit der ersten Kamera am Druckerzeugnis überprüfte Inspektionsfeld und das mit der mindestens einen weiteren Kamera überprüfte Inspektionsfeld, welches zumindest abschnittsweise mit dem der ersten Kamera übereinstimmt, angezeigt werden können. Alternativ oder zusätzlich kann auch ein einzelner Bildschirm vorgesehen sein, auf dem mehrere Anzeigen bzw. Wiedergaben der Inspektionsfelder nebeneinander oder zumindest teilweise überlappend wiedergegeben werden. Zwischen den beiden derartigen Anzeigen kann der Betrachter bzw. Inspekteur sehr schnell eine Korrelation herstellen und auf diese Weise sowohl besonders gut die erkannten Fehler hinsichtlich ihrer Relevanz beurteilen, als auch ihre genaue Ursache feststellen.

Damit vom Betrachter die Korrelation zwischen den beiden Anzeigen noch schneller erkannt werden kann, sollte vorteilhaft an mindestens einer der Anzeigen eine Markierung anzeigbar sein, mit welcher der von der mindestens einen weiteren Kamera aufgenommene Inspektionsfeldausschnitt innerhalb des gesamten Inspektionsfeldes markiert ist.

Bei der erfindungsgemäßen Vorrichtung sollten ferner die erste und die mindestens eine weitere Kamera gemeinsam beweglich angeordnet sein. Diese Bewegungsmöglichkeit kann beispielsweise mittels einer Quertraverse geschaffen sein, welche über oder vor dem durch die Druckmaschine zu transportierenden Druckerzeugnis angeordnet ist. Zusätzlich oder alternativ sollten die erfindungsgemäß vorgesehenen mehreren Kameras gemeinsam in einem Gehäuse angeordnet und/oder mit einer gemeinsamen Beleuchtung versehen sein. Um insgesamt die Kosten für die erfindungsgemäße Vorrichtung gering zu halten, sollten die mehreren Kameras ferner mit einem gemeinsamen Rechner zur Auswertung bzw. Bildverarbeitung verbunden sein. Nach dem derzeitigen Stand der Computertechnologie können dabei vergleichsweise kostengünstig die Bilddaten von bis zu zirka vier Kameras (welche vorteilhaft beispielsweise ein übergeordnetes Inspektionsfeld und darin drei Inspektionsfeldausschnitte betrachten) verarbeitet werden.

Alternativ sind bei der erfindungsgemäßen Vorrichtung vorteilhaft die erste und die mindestens eine weitere Kamera derart gestaltet, dass das Inspektionsfeld der mindestens einen weiteren Kamera relativ zum Inspektionsfeld der ersten Kamera bewegbar, insbesondere verschiebbar ist. Die Verschiebung der Inspektionsfelder kann dabei durch ein Bewegen der Kameras relativ zueinander (beispielsweise mittels eines Linearmotors) oder vorteilhaft durch ein so genanntes Shift-Objektiv erfolgen, mittels dem die Blickrichtung einer einzelnen Kamera gegebenenfalls auch ferngesteuert veränderbar ist. Die Verwendung von Shift-Objektiven kann auch bei relativ zueinander nicht beweglichen Inspektionsfeldern von Vorteil sein, nämlich insbesondere dann, wenn zwei Kameras auf einen einzelnen Bereich am Druckerzeugnis zentrisch ausgerichtet sein sollen. Mit der erzielten Relativbewegung von Inspektionsfeld und insbesondere Inspektionsfeldausschnitt ist es auch möglich, dass mit der mindestens einen weiteren Kamera mehrere verschiedene Bereiche im übergeordneten Inspektionsfeld erreicht und kontrolliert werden können. Ferner kann die weitere Kamera gezielt auf Bereiche ausgerichtet werden, welche nach der Kontrolle des Übersichtsbildes der ersten Kamera als kontrollbedürftig erachtet worden sind. Schließlich kann durch das Verstellen der mindestens einen weiteren Kamera auch eine erfolgte Bewegung des zu untersuchenden Erzeugnisses vor den genannten Kameras ausgeglichen werden.

Eine erfindungsgemäß gestaltete, insbesondere ganz oder teilweise beweglich angeordnete Vorrichtung, ist an den genannten Druckmaschinen vorteilhaft hinter deren Druckwerk und bei mehreren Druckwerken insbesondere hinter dem letzten Druckwerk angeordnet. Alternativ oder zusätzlich kann die erfindungsgemäße Vorrichtung auch bei Maschinen zum Herstellen und Handhaben von Druckbögen, wie beispielsweise Einrichtungen zum Vereinzeln, Falzen, Schneiden, Sammeln, Stapeln, Beilegen, Einlegen, Sortieren und Ablegen von Blättern oder Bahnen genutzt werden.

Weitere Anwendungsgebiete für die erfindungsgemäße Vorrichtung sind Maschinen und Einrichtungen zur buchbinderischen Erzeugung und Weiterbehandlung von Druckerzeugnissen sowie Kontrolleplätze außerhalb von Druckmaschinen, welche insbesondere eine stichprobenhafte Qualitätsbewertung der Druckerzeugnisse gestatten. Darüber hinaus kann die erfindungsgemäße Vorrichtung auch in anderen technischen Bereichen eingesetzt werden, insbesondere zur Überprüfung und Kontrolle der Oberflächengüte von Bauteilen, wie beispielsweise Blechen und/oder zur Erkennung von Materialschäden. Die dabei verwendeten einzelnen Kameras können ferner vorteilhaft Röntgenkameras, Ultraschallkameras, Wärmebildkameras oder Infrarotkameras sein.

### Kurzbeschreibung der Zeichnungen

Nachfolgend wird ein Ausführungsbeispiel einer erfindungsgemäßen Vorrichtung zur Inspektion von mit einer Druckmaschine hergestellten Druckerzeugnissen anhand der beigefügten schematischen Zeichnungen näher erläutert. Es zeigt:
Fig. 1 eine Seitenansicht einer Druckmaschine, an der an verschiedenen Positionen eine oder mehrere erfindungsgemäße Vorrichtungen zur Inspektion von hergestellten Druckerzeugnissen vorgesehen sein können,
Fig. 2 eine teilweise perspektivische, teilweise rein schematische Ansicht eines ersten Ausführungsbeispiels einer erfindungsgemäßen Vorrichtung zur Inspektion von mit der in Fig. 1 dargestellten Druckmaschine hergestellten Druckerzeugnissen, und
Fig. 3 eine teilweise perspektivische Ansicht eines zweiten Ausführungsbeispiels einer erfindungsgemäßen Vorrichtung zur Inspektion von mit der in Fig. 1 dargestellten Druckmaschine hergestellten Druckerzeugnissen.

### Detaillierte Beschreibung der Ausführungsbeispiele

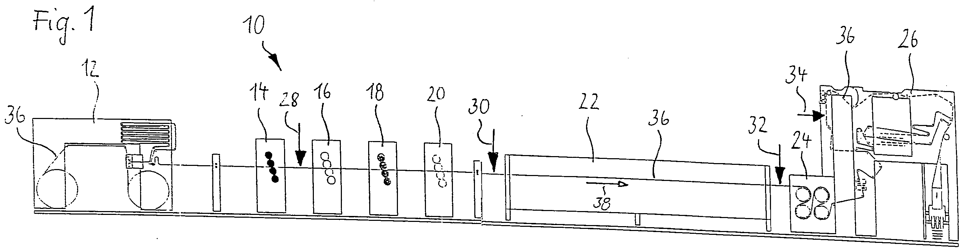

In Fig. 1 ist eine Druckmaschine 10 dargestellt, welche als wesentliche Elemente einen Rollenwechsler 12 mit integriertem Einzugswerk, insgesamt vier Druckwerke 14, 16, 18 und 20, einen Trockner 22, ein Kühlwerk 24 und schließlich einen Falzaufbau mit Falzwerk 26 aufweist. An der Druckmaschine 10 sind mit vier Pfeilen 28, 30, 32 und 34 insgesamt vier Positionen zum Anordnen einer oder mehrerer Inspektionsvorrichtungen gekennzeichnet, welche hier auch als Vorrichtung zur Inspektion der mit der Druckmaschine 10 hergestellten Druckerzeugnisse bezeichnet und nachfolgend näher erläutert werden. Die Inspektionsvorrichtungen sind dabei jeweils auf eine Papierbahn 36 gerichtet, welche entlang einer Laufrichtung 38 in üblicher Weise durch die Druckmaschine 10 hindurch transportiert und dabei beispielsweise mit einem Farbdruck versehen wird. Die Druckmaschine 10 dient auf diese Weise z.B. als Rollenoffsetmaschine für den Zeitungs- und/oder Illustrationsdruck.

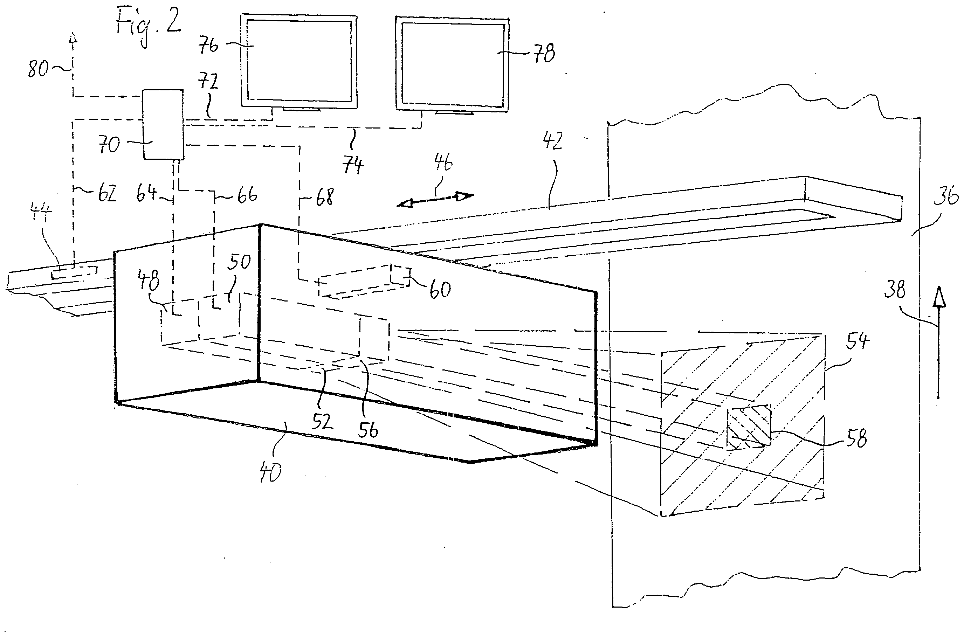

In Fig. 2 ist eine solche Inspektionsvorrichtung, im Detail dargestellt. Die Fig. 2 zeigt diese Inspektionsvorrichtung teilweise perspektivisch und teilweise rein schematisch, wobei der perspektivische Abschnitt der Zeichnung der Anordnung der Inspektionsvorrichtung gemäß dem in Fig. 1 dargestellten Pfeil 34 entspricht. Die Inspektionsvorrichtung befindet sich bei dieser Anordnung neben der Papierbahn 36, deren Laufrichtung 38 bezogen auf die Figuren 1 und 2 in diesem Bereich der Druckmaschine 10 von unten nach oben gerichtet ist.

Die Inspektionsvorrichtung weist dabei ein im Wesentlichen quaderförmiges Gehäuse 40 auf, welches hängend an einer Traverse 42 befestigt ist. Die Traverse 42 ist im Wesentlichen parallel zur Ebene der Papierbahn 36 vor dieser in Querrichtung zur Laufrichtung 38 angeordnet. Die Travers 42 umfasst ferner einen nicht näher dargestellten Schlitten, an dem das Gehäuse 40 ortsfest angebracht ist und der mit Hilfe eines ebenfalls nicht näher veranschaulichten Schrittmotors und eines Zahnriemens entlang einer Achse 46 der Traverse verschoben und dabei mit einer Genauigkeit von zirka 0,05 mm und einer Geschwindigkeit von bis zu zirka 0,5 m/s entlang dieser Achse 46 positioniert werden kann. Die Steuerung der Bewegung des Gehäuses 40 an der Traverse 42 wird von einer Traversensteuerung 44 übernommen, mit der insbesondere der oben genannte, nicht dargestellte Schrittmotor sowie ebenfalls nicht dargestellte magnetische Referenzschalter der Traverse 42 verbunden sind.

In dem Gehäuse 40 sind eine erste Kamera 48 und eine zweite Kamera 50 untergebracht, die unmittelbar nebeneinander angeordnet und beide auf die Papierbahn 36 gerichtet sind. Die erste Kamera 48 ist dabei mit einem so genannten Normalobjektiv 52 ausgestattet, mittels dem an der Papierbahn 36 ein Inspektionsfeld 54 aufgenommen werden kann. Dieses Inspektionsfeld 54 umfasst einen wesentlichen Teil des eigentlichen Druckbildes auf der Papierbahn 36 und stellt damit eine Art Übersichtsbild des auf die Papierbahn 36 aufgebrachten Farbdrucks bereit. Die zweite Kamera 50 ist mit einem so genannten Teleobjektiv 56 versehen, mittels dem ein Inspektionsfeldausschnitt 58 des Inspektionsfeldes 54 aufgenommen werden kann. Dieser Inspektionsfeldausschnitt 58 ist dabei ein Detailbild mit erhöhter Ortsauflösung in dem mit der ersten Kamera 48 aufgenommenen Übersichtsbild.

Zur Beleuchtung des mit der ersten Kamera 48 aufgenommenen Inspektionsfeldes 54 und des mit der zweiten Kamera 50 aufgenommen Inspektionsfeldausschnitts 58, ist in dem Gehäuse 40 ferner eine Blitzleuchte 60 vorgesehen.

Die oben genannten Bauelemente Traversensteuerung 44, erste Kamera 48, zweite Kamera 50 und Blitzleuchte 60 sind einzeln über Leitungen 62, 64, 66 bzw. 68 mit einem nur sehr schematisch dargestellten Rechner 70 verbunden. An diesen Rechner 70 sind ferner zwei Leitungen 72 und 74 angeschlossen, welche zu Bildschirmen 76 und 78 führen. Schließlich ist am Rechner 70 noch eine Steuerleitung 80 angeschlossen, welche zu einer nicht dargestellten Steuerung der Druckmaschine 10 führt.

Der Rechner 70 ist dabei dazu eingerichtet, dass er sowohl die Traversensteuerung 44 als auch die Blitzleuchte 60 ansteuert, ferner die von den Kameras 48 und 50 aufgenommenen Bildinformationenauf den Bildschirmen 76 und 78 dargestellt und darüber hinaus mit diesen Informationen eine umfassende Bildverarbeitung durchführt.

Ein wichtiger Aspekt ist dabei, dass der Rechner 70 aufgrund des dualen Kamerasystems 48, 50 sowohl ein Übersichtsbild als auch ein Detailbild von Druckbildern auf der Papierbahn 36 im Wesentlichen gleichzeitig anzeigen und auswerten kann.

Da die Inspektionsvorrichtung dabei insbesondere ohne Zoom-Kamera arbeitet, kann auf eine aufwendige Ansteuerung einer solchen Zoom-Kamera und auf ein zeitintensives Verfahren eines zugehörigen Zoom-Objektivs verzichtet werden. Ferner weisen die an den Kameras 48 und 50 vorgesehenen Objektive 52 und 56, welche mit Festbrennwerten versehen sind, im Vergleich zu einem Zoom-Objektiv insbesondere im Randbereich der Bildfelder eine verzerrungsärmere und detaillierter aufgelöste Bildqualität auf. Schließlich kann auch auf den Einsatz von die Bildqualität erheblich verschlechternden Nahlinsen verzichtet werden, so dass insgesamt schärfere und kontrastreichere Bilder zur Verfügung gestellt werden können. Weil ein Verfahren eines Zoom-Objektives entfällt, können die Bildaufnahmezeiten erheblich verringert werden. Ferner können von den sich vor den Kameras 48 und 50 bewegenden Druckbildern auf der schnell durch die Druckmaschine 10 laufenden Papierbahn 36 jeweils sowohl ein Übersichtsbild als auch ein Detailbild aufgenommen werden. Diese beiden Bilder, d.h. das Übersichtsbild und das Detailbild, können dann an den beiden Bildschirmen 76 und 78 auch gleichzeitig zur Anzeige gebracht werden. Dies führt an den Bildschirmen 76 und 78 zu einer größeren Übersicht und einer schnelleren und sichereren Entscheidungsfindung.

Insgesamt kann so die Druckqualität an der Druckmaschine 10 besonders schnell, einfach und kostengünstig erhöht werden. Da dabei insbesondere eine Echtzeitmessung möglich ist, können Fehler und Qualitätsabweichungen schneller erkannt werden. Besonders wichtig ist dabei, dass die gleichzeitig aufgenommenen Bilder zueinander besonders gut korrelieren, weil insbesondere Abweichungen hinsichtlich der Beleuchtung, wie sie bei aufeinander folgenden Aufnahmen auftreten können, erfindungsgemäß weitgehend ausgeschlossen sind. Dies alles führt zu einer Steigerung der Produktivität der Druckmaschine bei gleichzeitiger Kostensenkung durch Verringerung der Makulatur.

Auf diese Weise ist mit der beschriebenen Inspektionsvorrichtung sowohl eine Bahnbeobachtung, als auch eine Qualitätskontrolle bei gleichzeitiger Farbregistermessung und/oder Inline-Farbmessung möglich.

Das mit der ersten Kamera 48 bereitgestellte Übersichtsbild erleichtert auch das Einrichten von Positionsfenstern der jeweils die Detailbilder aufnehmenden zweiten Kamera 50. So kann nach einem derartigen Einrichten von Positionsfenstern nachfolgend das Gehäuse 40 mit den darin angeordneten Kameras 48 und 50 mit Hilfe der Traverse 42 in einer selektierbaren Kamerapositionsfolge mit definierbarem Zeitablauf automatisch verfahren werden.

Es kann ferner mit der ersten Kamera 48 oder der zweiten Kamera 50 eine Aufnahme bereitgestellt werden, mit der ein komfortabler Bildvergleich durch eine Bild-im-Bild-Darstellung (PIP) möglich ist. Die Bildgröße des reell aufgenommenen Bildes kann im Wesentlichen frei gewählt werden. Mit der das Übersichtsbild liefernden Kamera 48 kann ferner durch eine entsprechende Auswertung auch erkannt werden, wenn eine Messmarke, welche von der zweiten Kamera 50 kontrolliert werden soll, beispielsweise wegen einer starken Schwankung der Rollenbahn der Druckmaschine kurzfristig aus dem Bildfeld der zweiten Kamera 50 herausläuft. Es kann dann mittels der ersten Kamera 48 die zweite Kamera 50 entsprechend nachgeführt werden.

In dem mit der ersten Kamera 48 aufgenommenen Übersichtsbild kann ferner ein Marker bzw. ein Rahmen für das mit der zweiten Kamera 50 aufgenommene Detailbild wahlweise eingeblendet werden.

Während das Übersichtsbild in der ersten Kamera 48 ferner beispielsweise zum frühzeitigen Erkennen von Rakelstreifen genutzt werden kann, kann zugleich mit dem Detailbild der zweiten Kamera 50 eine Passerbeobachtung durchgeführt werden. Diese gleichzeitig Kontrolle mehrerer Qualitätsmerkmale mit Hilfe zumindest zweier Kameras 48 und 50 ermöglicht bei Qualitätsabweichungen eine erheblich schnellere Reaktion und führt dadurch nicht allein zu einer Qualitätserhöhung sondern auch zu einer erheblichen Steigerung der Produktivität der derart überwachten Druckmaschine 10.

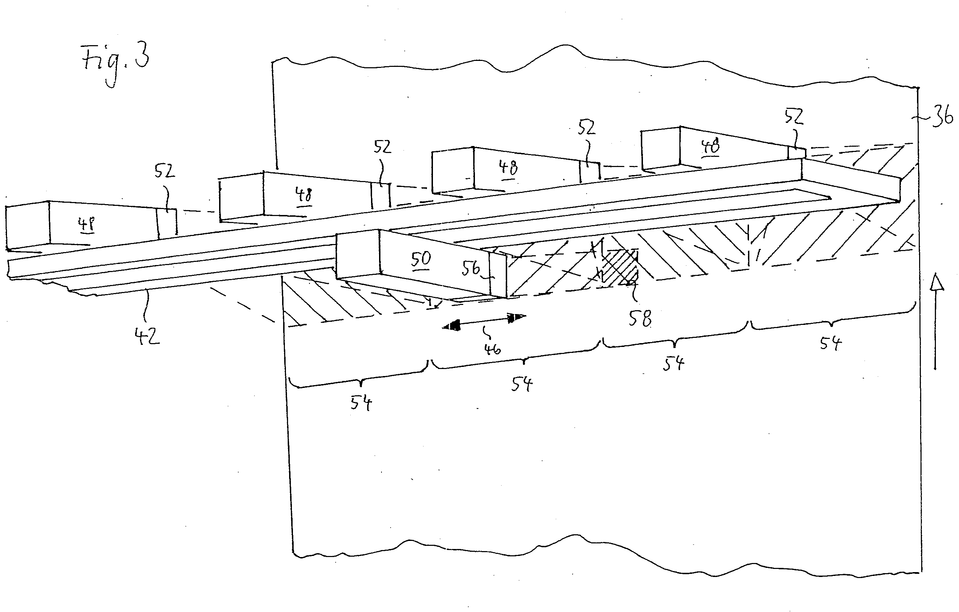

In Fig. 3 ist ein Ausführungsbeispiel einer erfindungsgemäßen Inspektionsvorrichtung dargestellt, welche ebenfalls mit einer Traverse 42 vor der zu untersuchenden Papierbahn 36 versehen ist.

An der Traverse 42 ist jedoch im Gegensatz zu dem in Fig. 2 dargestellten Ausführungsbeispiel nicht nur eine erste Kamera 48 vorgesehen, sondern es sind insgesamt vier dieser Kameras 48 in regelmäßigen Abständen an der Traverse 42 angeordnet. Die vier ersten Kameras 48 sind dabei an der Oberseite der Traverse 42 jeweils ortsfest angebracht und derart mit jeweils einem Normalobjektiv 52 auf die Papierbahn 36 gerichtet, dass mit ihnen insgesamt vier unmittelbar nebeneinander angeordnete (und sich dabei geringfügig überlappende) Inspektionsfelder 54 betrachtet werden. Diese Inspektionsfelder 54 bilden zusammen einen Inspektionsstreifen, welcher sich im Wesentlichen quer über die gesamte Papierbahn 36 und zumindest über die darauf angefertigten Druckbilder erstreckt.

An der Unterseite der Traverse 42 gemäß Fig. 3 ist an einem beweglichen Schlitten dieser Traverse 42 eine einzelne so genannten zweite Kamera 50 derart hängend angebracht, dass sie mittels der Traverse 42 (und einer nicht dargestellten Steuer- und Auswerteeinrichtung entsprechend der Fig. 2) vor der Papierbahn 36 in einer Richtung 46 quer verfahren werden kann.

Die Kamera 50 ist ferner mit einem als Shift-Objektiv gestalteten Teleobjektiv 56 versehen, welches so eingestellt bzw. geshiftet ist, dass sein Bildfeld stets auf einen Inspektionsfeldausschnitt 58 von zumindest einem der oben genannten Inspektionsfelder 54 gerichtet ist.

### Bezugszeichenliste

- 10: Druckmaschine
- 12: Rollenwechsler
- 14: Druckwerk
- 16: Druckwerk
- 18: Druckwerk
- 20: Druckwerk
- 22: Trockner
- 24: Kühlwerk
- 26: Falzaufbau mit Falzwerk
- 28: mögliche Anordnung einer Inspektionsvorrichtung
- 30: mögliche Anordnung einer Inspektionsvorrichtung
- 32: mögliche Anordnung einer Inspektionsvorrichtung
- 34: mögliche Anordnung einer Inspektionsvorrichtung
- 36: Papierbahn
- 38: Laufrichtung der Papierbahn
- 40: Gehäuse
- 42: Traverse
- 44: Traversensteuerung
- 46: Achse der Traverse
- 48: erste Kamera
- 50: zweite Kamera
- 52: Normalobjektiv
- 54: Inspektionsfeld
- 56: Teleobjektiv
- 58: Inspektionsfeldausschnitt
- 60: Blitzleuchte
- 62: Leitung
- 64: Leitung
- 66: Leitung
- 68: Leitung
- 70: Rechner
- 72: Leitung
- 74: Leitung
- 76: Bildschirm
- 78: Bildschirm
- 80: Steuerleitung

## Patentansprüche

1. Vorrichtung zur Inspektion von mit einer Druckmaschine (10) hergestellten Druckerzeugnissen (36), die mit einer ersten, ein Normalobjektiv (52) umfassenden Kamera (48) versehen ist, welche auf ein am Druckerzeugnis (36) zu überprüfendes Inspektionsfeld (54) gerichtet ist, und bei der mindestens eine weitere, ein Teleobjektiv (56) umfassende Kamera (50) vorgesehen ist, welche zumindest abschnittsweise zeitgleich auf dasselbe Inspektionsfeld (54) der ersten Kamera (48) gerichtet ist, wobei die mindestens eine weitere Kamera (50) allein auf einen Inspektionsfeldausschnitt (58) des Inspektionsfeldes (54) der ersten Kamera (48) gerichtet ist, **dadurch gekennzeichnet, dass** mit der mindestens einen weiteren Kamera (50) eine höher ortsaufgelöste Aufnahme des Inspektionsfeldausschnitts (58) des Inspektionsfeldes (54) der ersten Kamera (48) bereitgestellt ist, wobei beide Kameras (48, 50) unmittelbar auf das Druckerzeugnis (36) gerichtet sind.

2. Vorrichtung nach Anspruch 1,
**dadurch gekennzeichnet, dass** die erste Kamera (48) auf zumindest einen wesentlichen Teil des eigentlichen Druckbildes des Druckerzeugnisses (36) gerichtet Ist.

3. Vorrichtung nach Anspruch 2,
**dadurch gekennzeichnet, dass** die mindestens eine weitere Kamera (50) auf mindestens eine am eigentlichen Druckbild des Druckerzeugnisses (36) angeordnete Messmarke gerichtet ist.

4. Vorrichtung nach Anspruch 2 oder 3,
**dadurch gekennzeichnet, dass** die mindestens eine weitere Kamera (50) auf einen am eigentlichen Druckbild des Druckerzeugnisses (36) angeordneten, insbesondere farbigen Druckkontrollstreifen gerichtet ist.

5. Vorrichtung nach einem der Ansprüche 1 bis 4,
**dadurch gekennzeichnet, dass** mindestens zwei Anzeigen, Insbesondere in Gestalt von Bildschirmen (76, 78) vorgesehen sind, mit denen das Inspektionsfeld (54) der ersten Kamera (48) und das Inspektionsfeld (58) der mindestens einen weiteren Kamera (50), welches zumindest abschnittsweise mit dem der ersten Kamera (48) übereinstimmt, angezeigt werden können.

6. Vorrichtung nach Anspruch 5,
**dadurch gekennzeichnet, dass** an mindestens einer der Anzeigen eine Markierung angezeigt werden kann, mit welcher der von der mindestens einen weiteren Kamera (50) aufgenommene Inspektionsfeldausschnitt (58) des Inspektionsfeldes (54) der ersten Kamera (48) markiert ist.

7. Vorrichtung nach einem der Ansprüche 1 bis 6,
**dadurch gekennzeichnet, dass** die erste und die mindestens eine weitere Kamera (48, 50) gemeinsam beweglich angeordnet (40, 42, 44, 46) sind.

8. Vorrichtung nach einem der Ansprüche 1 bis 7,
**dadurch gekennzeichnet, dass** die erste und die mindestens eine weitere Kamera (48, 50) derart gestaltet sind, dass das Inspektionsfeld (58) der mindestens einen weiteren Kamera (50) relativ zum Inspektionsfeld (54) der ersten Kamera (48) bewegbar ist.

9. Druckmaschine (10) mit einer Vorrichtung zur Inspektion nach einem der Ansprüche 1 bis 8.

10. Druckmaschine nach Anspruch 9,
**dadurch gekennzeichnet, dass** mindestens ein Druckwerk (14, 16, 18, 20) vorgesehen und die Vorrichtung zur Inspektion in Transportrichtung des herzustellenden Druckerzeugnisses (36) hinter dem Druckwerk (14, 16, 18, 20), bei mehreren Druckwerken (14, 16, 18, 20) insbesondere hinter dem letzten Druckwerk (20) angeordnet ist.

## Claims

1. Device for inspection of printed products (36) produced by a printing machine (10), wherein the device is provided with a first camera (48) that is directed to an inspection field (54) to be checked and at least one further camera (50) that is directed at least partially and simultaneously to the same inspection field (54) of the first camera (48), wherein the first camera (48) comprises a standard lens (52) and the at least one further camera (50) comprises a telephoto lens (56), wherein the at least one further camera (50) is solely directed to an inspection field section (58) of the inspection field (54) of the first camera (48), **characterised in that** a higher spatially resolved recording of the inspection field section (58) of the inspection field (54) of the first camera (48) is provided by the at least one further camera (50), wherein both cameras (48, 50) are straight directed to the printed product (36).

2. Device according to claim 1, **characterised in that** the first camera (48) is directed to at least a substantial part of the actual printed image of the printed product (36).

3. Device according to claim 2, **characterised in that** the at least one further camera (50) is directed to at least one measurement mark arranged on the actual printed image of the printed product (36).

4. Device according to claim 2 or 3, **characterised in that** the at least one further camera (50) is directed to an in particular coloured print control strip arranged at the actual print image of the printed product (36).

5. Device according to any one of claims 1 to 4, **characterised in that** at least two displays, in particular in the shape of screens (76, 78), are provided, with which the inspection field (54) of the first camera (48) and the inspection field (58) of the at least one further camera (50) can be displayed, wherein the inspection field (58) of the at least one further camera (50) corresponds at least partially to that of the first camera (48).

6. Device according to claim 5, **characterised in that** on at least one of the displays a mark can be displayed, by means of which the inspection field section (58) recorded by the at least one further camera (50) of the inspection field (54) of the first camera (48) is marked.

7. Device according to any one of claims 1 to 6, **characterised in that** the first and the at least one further camera (48, 50) are arranged to be moved (40, 42, 44, 46) together.

8. Device according to any one of claims 1 to 7, **characterised in that** the first and the at least one further camera (48, 50) are formed such that the inspection field (58) of the at least one further camera (50) can be moved relatively to the inspection field (54) of the first camera (48).

9. Printing machine (10) with a device for inspection according to any one of claims 1 to 8.

10. Printing machine according to claim 9, **characterised in that** at least one printing unit (14, 16, 18, 20) is provided and the device for inspection is arranged in transport direction of the printed product (36) to be produced downstream of the printing unit (14, 16, 18, 20), with a plurality of printing units (14, 16, 18, 20) in particular downstream of the last printing unit (20).

## Revendications

1. Dispositif pour l'inspection de produits imprimés (36) fabriqués avec une machine à imprimer (10), lequel dispositif d'inspection est muni d'une première caméra (48) incluant un objectif ordinaire (52) et dirigée vers un champ d'inspection (54) à contrôler sur le produit imprimé (36), et dans lequel est prévue au moins une caméra supplémentaire (50) incluant un téléobjectif (56) et dirigée, au moins en partie, simultanément vers le même champ d'inspection (54) que la première caméra (48), seule ladite au moins une caméra supplémentaire (50) étant dirigée vers une portion de champ d'inspection (58) du champ d'inspection (54) de la première caméra (48), **caractérisé en ce que** ladite au moins une caméra supplémentaire (50) permet d'obtenir une résolution spatiale plus élevée de la portion de champ d'inspection (58) du champ d'inspection (54) de la première caméra (48), les deux caméras (48, 50) étant directement dirigées vers le produit imprimé (36).

2. Dispositif selon la revendication 1,
**caractérisé en ce que** la première caméra (48) est dirigée vers au moins une partie principale de l'image imprimée réelle du produit imprimé (36).

3. Dispositif selon la revendication 2,
**caractérisé en ce que** ladite au moins une caméra supplémentaire (50) est dirigée vers au moins un repère de mesure disposé sur l'image imprimée réelle du produit imprimé (36).

4. Dispositif selon la revendication 2 ou la revendication 3,
**caractérisé en ce que** ladite au moins une caméra supplémentaire (50) est dirigée vers une bande de contrôle d'impression, en particulier colorée, agencée sur l'image imprimée réelle du produit imprimé (36).

5. Dispositif selon l'une des revendications 1 à 4,
**caractérisé en ce qu'**au moins deux affichages sont prévus, en particulier sous forme d'écrans (76, 78), au moyen desquels le champ d'inspection (54) de la première caméra (48) et le champ d'inspection (58) de ladite au moins une caméra supplémentaire (50), qui correspond au moins en partie à celui de la première caméra (48), peuvent être affichés.

6. Dispositif selon la revendication 5,
**caractérisé en ce qu'**un marquage peut être affiché sur au moins un des affichages, marquage au moyen duquel est repérée la portion de champ d'inspection (58) du champ d'inspection (54) de la première caméra (48) capturée par ladite au moins une caméra supplémentaire (50).

7. Dispositif selon l'une des revendications 1à 6,
**caractérisé en ce que** la première caméra et ladite au moins une caméra supplémentaire (48, 50) sont agencées de manière à pouvoir se déplacer ensemble (40, 42, 44, 46).

8. Dispositif selon l'une des revendications 1 à 7,
**caractérisé en ce que** la première caméra et ladite au moins une caméra supplémentaire (48, 50) sont conçues de telle sorte que le champ d'inspection (58) de ladite au moins une caméra supplémentaire (50) est mobile par rapport au champ d'inspection (54) de la première caméra (48).

9. Machine à imprimer (10) pourvue d'un dispositif d'inspection selon l'une des revendications 1 à 8.

10. Machine à imprimer selon la revendication 9,
**caractérisée en ce qu'**au moins une unité d'impression (14, 16, 18, 20) est prévue et **en ce que** le dispositif d'inspection est agencé dans la direction de transport du produit imprimé à fabriquer (36) derrière l'unité d'impression (14, 16, 18, 20), plusieurs unités d'impression (14, 16, 18, 20) étant agencées en particulier derrière la dernière unité d'impression (20).
